# EUROPEAN PATENT SPECIFICATION

(11) **EP 0 574 229 B1**
(45) Date of publication and mention of the grant of the patent: **23.04.1997**
(21) Application number: 93304443.0
(22) Date of filing: 08.06.1993
(51) Int. Cl.: C08L 77/00, C08L 71/12, C08L 23/08

(54) **Thermoplastic resin composition and molded article**
Thermoplastische Harzzusammensetzung und Formkörper
Composition de résine thermoplastique et article moulé

(30) Priority: 10.06.1992 JP 150774/92
(43) Date of publication of application: 15.12.1993
(73) Proprietor: MITSUBISHI GAS CHEMICAL COMPANY, INC., Tokyo, 100 (JP)
(72) Inventor: Norisue, Yasumasa, Hiratsuka-shi, Kanagawa-ken (JP); Shimaoka, Goro, Hiratsuka-shi, Kanagawa-ken (JP); Fukaya, Yoshio, Hiratsuka-shi, Kanagawa-ken (JP); Murayama, Hiroshi, Hiratsuka-shi, Kanagawa-ken (JP)
(74) Representative: Cresswell, Thomas Anthony

(56) References cited:
- EP-A- 0 231 626
- EP-A- 0 269 748
- EP-A- 0 270 247
- EP-A- 0 335 506
- WO-A-87/05311

## Description

### Detailed Description of the Invention

### <Technical field>

The present invention relates to a thermoplastic resin composition containing a polyphenylene ether resin and a polyamide resin as base polymers, and a molded article produced therefrom. More specifically, it relates to a thermoplastic resin composition which is excellent in moldability and gives automobile parts, office automation equipment housings and electric and electronic parts which are light in weight, excellent in various mechanical properties, particularly low-temperature impact resistance and excellent in chemical resistance and heat resistance.

### <Prior art>

A polyphenylene ether resin is excellent in various properties including thermal properties, mechanical properties and electric properties. However, it is poor in moldability due to its high melt-processing temperature and low fluidity. Further, some organic solvents dissolve or swell it although it exhibits high resistance against inorganic chemicals such as acids and alkalis. It is therefore strongly desired to improve the polyphenylene ether resin in solvent resistance and oil resistance.

Attempts have been already made to improve the polyphenylene ether resin in moldability and oil resistance. For example, Japanese Patent Publication No. 997/1970 discloses a method in which 20 % or less of a polyamide resin is incorporated into the polyphenylene ether to improve the moldability. Japanese Patent Publication No. 41,663/1984 discloses a method in which 30 to 95 % of a polyamide resin is incorporated into the polyphenylene ether resin to improve the oil resistance. Further, there have been proposed some methods in which other components are incorporated for improving the compatibility between the polyphenylene ether resin and the polyamide resin,

For example, Japanese Laid-open Patent Application No. 26,913/1981 discloses a method in which a compound whose molecule contains a carbon-carbon double bond and a functional group selected from a carboxylic acid group, an acid anhydride group, an acid amide group and an imide group, such as maleic acid or maleimide, is incorporated as a third component. Japanese Patent Publication No. 33,614/1984 discloses a method in which a copolymer from a styrene compound and an α, β-unsaturated dicarboxylic acid is incorporated.

It is also known that, when a polyamide resin is incorporated into a modified polyphenylene ether resin prepared by thermally reacting a polyphenylene ether resin with a 1,2-substituted olefin compound having an acid anhydride structure in the absence of a catalyst, a resin composition having improved tenacity can be obtained in a wide range of their mixing ratio, differing from a composition of an unmodified polyphenylene ether resin and a polyamide resin (Japanese Laid-open Patent Application No. 132,924/1987).

It has been also proposed to incorporate a variety of elastomers for improving Izod impact strength. Further, Japanese Laid-open Patent Application No. 275,656/1989 discloses that when a modified polyphenylene ether resin prepared by reacting, in a molten state, a polyphenylene ether resin with a 1,2-substituted olefin compound having an acid anhydride structure in the co-presence of a specific elastomer is mixed with a polyamide resin, the polyphenylene ether exhibits remarkable improvement in impact resistance.

### <Problems to be solved by the invention>

Due to the above techniques, the compatibility between the polyphenylene ether resin and the polyamide resin has been improved, and the polyphenylene ether resin composition has been improved in mechanical properties. However, the polyphenylene ether resin composition is not necessarily satisfactory in impact strength in low-temperature atmosphere, nor does it meet with a demand for decreasing its weight. Further, the polyphenylene ether resin composition is required to have excellent fluidity in order to give large-sized molded articles such as automobile exterior parts, while it has been difficult to simultaneously satisfy the fluidity and low-temperature impact resistance with the above prior art techniques.

### <Means for solving the problems>

It is an object of the present invention to improve both the performances, low-temperature impact resistance and fluidity, of a resin composition containing a polyphenylene ether resin and a polyamide resin as base polymers and to obtain light-weight molded articles of the resin composition.

According to the present invention, the above objects and advantages of the present invention are achieved by a thermoplastic resin composition consisting essentially of:
(a) a polyphenylene ether resin [component (a)] having a main chain comprising structural units of the formula (1), 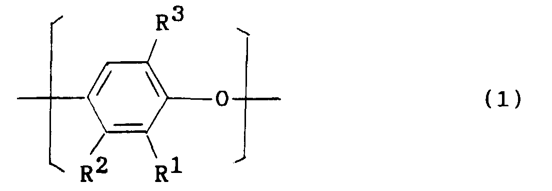 wherein R¹ is a lower alkyl group having 1 to 3 carbon atoms, and each of R² and R³ is independently a hydrogen atom or a lower alkyl group having 1 to 3 carbon atoms,
(b) a polyamide resin [component (b)],
(c) a hydrogenated A-B-A structured block copolymer elastomer [component (c)] in which each of As is a polymer block from a vinyl aromatic hydrocarbon and B is a polymer block from a conjugated diene hydrocarbon compound,
(d) a polypropylene resin [component (d)],
(e) a compatibilizer [component (e)], and
(f) an ethylene-α-olefin copolymer [component (f)] modified with at least one member selected from an unsaturated acid anhydride and an unsaturated acid,
wherein:
(i) per 100 parts by weight of the total amount of the components (a) and (b), the component (a) is contained in an amount of 70 to 30 parts by weight, and the component (b) is contained in an amount of 30 to 70 parts by weight,
(ii) the component (c) is contained in an amount of 2 to 40 parts by weight per 100 parts by weight of the component (a),
(iii) the component (d) is contained in an amount of 2 to 60 parts by weight per 100 parts by weight of the component (a),
(iv) the component (e) is contained in an amount of 0.01 to 10 parts by weight per 100 parts by weight of the component (a),
(v) the component (f) is contained in an amount of 2 to 40 parts by weight per 100 parts by weight of the component (b), and
(vi) the component (b) is a continuous phase, and the component (a) is a dispersed phase.

The thermoplastic resin composition of the present invention will be more specifically explained hereinafter.

The polyphenylene ether resin [component (a)] used in the resin composition of the present invention is a polymer having, as a main chain, the structural unit of the formula (1), 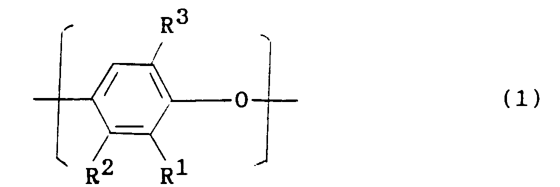 wherein R¹ is a lower alkyl group having 1 to 3 carbon atoms, and each of R² and R³ is independently a hydrogen atom or a lower alkyl group having 1 to 3 carbon atoms.

The above polyphenylene ether resin may be either a homopolymer or a copolymer. Polyphenylene ether resins which are usually produced or commercially available as engineering plastics can be used without any change.

Specific examples of the above polyphenylene ether resin as component (a) include
poly(2,6-dimethyl-1,4-phenylene)ether, poly(2,6-diethyl-1,4-phenylene)ether, poly(2,6-dipropyl-1,4-phenylene)ether, poly(2-methyl,6-ethyl-1,4-phenylene)ether, and poly(2-methyl,6-propyl-1,4-phenylene)ether. Particularly preferred is poly(2,6-dimethyl-1,4-phenylene)ether or a 2,6-dimethylphenol/2,3,6-trimethylphenol copolymer.

The polyamide resin [component (b)] used in the present invention is a polymer whose main chain contains a -CONH- bond. Examples of the polyamide resin include 4-nylon, 6-nylon, 4,6-nylon, 6,6-nylon, 12-nylon, 11-nylon, 6,10-nylon and MXD-6 nylon. These polyamide resins may be used alone or in combination. Preferred is 6-nylon, 6,6-nylon, 11-nylon or 12-nylon.

The mixing ratio of the above polyphenylene ether resin [component (a)] and polyamide resin [component (b)] is as follows. Per 100 parts by weight of the total amount of the components (a) and (b), the amount of the component (a) is 70 to 30 parts by weight, preferably 60 to 40 parts by weight, and the amount of the component (b) is 30 to 70 parts by weight, preferably 40 to 60 parts by weight. When the amount of the component (a) is smaller than the above lower limit, the resin composition is poor in heat resistance, water resistance and dimensional stability. When it is larger than the above upper limit, the chemical resistance and moldability are not sufficiently improved.

The component (c) used in the present invention is a hydrogenated A-B-A structured block copolymer elastomer in which A and B are polymer blocks. The central block B is formed from a conjugated diene hydrocarbon compound, usually from a butadiene or isoprene polymer. Before hydrogenation, the central block B is a polybutadiene block or polyisoprene block, while, after the hydrogenation, it is a block of polybutadiene or polyisoprene whose double bonds have been converted to saturated hydrocarbon. The terminal blocks, A, are polymer blocks from vinyl aromatic hydrocarbon, preferably blocks of polystyrene.

The weight average molecular weight of each terminal block A is approximately 4,000 to 115,000, preferably approximately 5,000 to 30,000. The weight average molecular weight of the central block B is approximately 20,000 to 450,000, preferably approximately 25,000 to 150,000. The hydrogenated A-B-A structured block copolymer elastomer is easily commercially available. For example, it includes commercially available products supplied by Shell Chemical Co. in the trade and grade names of "Kraton G1650", "Kraton G1651" and "Kraton G1657) and commercially available products supplied by Kuraray Co., Ltd. in the trade and grade names of "Septon 2002", "Septon 2003" and "Septon 2023".

The amount of the hydrogenated A-B-A structured block copolymer elastomer [component (c)] per 100 parts by weight of the polyphenylene ether resin [component (a)] is 2 to 40 parts by weight, preferably 5 to 30 parts by weight. When this amount is less than the above lower limit, the impact resistance is not sufficiently improved. When it exceeds the above upper limit, the mechanical strength decreases.

The polypropylene resin [component (d)] used in the present invention may be any one of a propylene homopolymer and a propylene copolymer such as an ethylene-propylene copolymer and an ethylene-propylene-α-olefin copolymer.

The polypropylene resin as the component (d) preferably has a melt flow rate (MFR value), measured at 230° C under a load of 2.16 kg (ASTM D-1238), of 1 to 100.

The amount of the polypropylene as the component (d) per 100 parts by weight of the polyphenylene ether resin [component (a)] is 2 to 60 parts by weight, preferably 10 to 50 parts by weight. When this amount is less than the above lower limit, the decrease in weight and the fluidity can not be sufficiently improved. When it is more than the above upper limit, the mechanical strength declines.

The compatibilizer as the component (e) used in the present invention is a 1,2-substituted olefin compound, and includes maleic anhydride, itaconic anhydride and citraconic anhydride. Maleic anhydride is particularly preferred. The amount of the compatibilizer [component (e)] per 100 parts by weight of the polyphenylene ether resin [component (a)] is 0.01 to 10 parts by weight, preferably 0.1 to 3 parts by weight, more preferably 0.3 to 2 parts by weight. When this amount is less than the above lower limit, the compatibility is not sufficiently improved, and it is difficult to obtain a composition having toughness. When it is used in an amount more than the above upper limit, the size of the dispersed particles of the polyphenylene ether resin [component (a)] unfavorably increases, and further, there occur undesirable phenomena such as a decrease in heat resistance and defectiveness in appearance.

Further, the component (f) used in the present invention is an ethylene-α-olefin copolymer modified with at least one member selected from an unsaturated acid anhydride and an unsaturated acid. This copolymer is preferably an ethylene-α-olefin copolymer copolymerized, particularly graft-polymerized, with an unsaturated acid or unsaturated acid anhydride. The α-olefin used for producing this copolymer is an unsaturated hydrocarbon compound having 3 to 20 carbon atoms, specific examples of which include propylene, 1-butene, 1-pentene, 1-hexene, 1-heptene, 3-methyl-1-butene and 4-methyl-1-pentene. Propylene is particularly preferred.

The ethylene/α-olefin amount ratio (by weight) is preferably 90/10 to 10/90. Examples of the unsaturated acid anhydride and unsaturated acid include maleic anhydride, itaconic anhydride, chloromaleic anhydride, citraconic anhydride, butenylsuccinic anhydride, tetrahydrophthalic anhydride and acids corresponding to these anhydrides. Particularly preferred are maleic anhydride and maleic acid. The above unsaturated acid anhydrides and acids may be used alone or in combination.

The ethylene-α-olefin copolymer and the unsaturated acid anhydride or unsaturated acid are reacted by mixing the ethylene-α-olefin copolymer with the unsaturated acid anhydride or unsaturated acid in the presence of a peracid, and kneading the resultant mixture in an extruder or mixer at 100 to 250°C for 1 to 10 minutes. In this case, the amount of the unsaturated acid anhydride or unsaturated acid based on the ethylene-α-olefin copolymer is preferbly 0.1 to 5 % by weight. The modified ethylene-α-olefin copolymer is easily commercially available. That is, it is available as a commercial product supplied by Exxon Chemical in the trade and grade name of "Exxelor VA1803" and as a commercial product supplied by Mitsui Petrochemical Industries, Ltd. in the trade and grade name of "Tafmer-MP-0610".

The amount of the modified ethylene-α-olefin copolymer [component (f)] per 100 parts by weight of the polyamide resin is 2 to 40 parts by weight, preferably 5 to 30 parts by weight. When this amount is less than the above lower limit, the impact strength is not sufficiently improved. When it exceeds the above upper limit, the mechanical strength and heat resistance decrease.

The resin composition of the present invention exhibits excellent properties owing to the specific dispersion structure of the components (a) to (f). That is, the polyamide resin [component (b)] forms a continuous phase (matrix phase), and the polyphenylene ether resin [component (a)] forms a dispersed phase. The hydrogenated A-B-A structured block copolymer elastomer [component (c)] and the polypropylene resin [component (d)] are both uniformly and intimately mixed with the polyphenylene ether resin [component (a)]. Concerning the dispersion form of the hydrogenated A-B-A structured block copolymer elastomer [component (c)] and the polypropylene resin [component (d)] in the polyphenylene ether resin [component (a)], preferably, the hydrogenated A-B-A structured block copolymer elastomer [component (c)] and the polypropylene resin [component (d)] are present in a form in which the polypropylene resin [component (d)] is included in the hydrogenated A-B-A structured block copolymer elastomer [component (c)], or in a form in which the hydrogenated A-B-A structured block copolymer elastomer [component (c)] is present in the interface between the polypropylene resin [component (d)] and the polyphenylene ether resin [component (a)]. Further, the compatibilizer [component (e)] is uniformly and intimately present in the polyphenylene ether resin [component (a)]. Moreover, the modified ethylene-α-olefin copolymer [component (f)] is uniformly and intimately mixed with the polyamide resin [component (b)].

On the other hand, more preferably, the dispersion particle diameter of the polyphenylene ether resin [component (a)] to be dispersed in the polyamide resin [component (b)] is limited to 0.9 µm or less. When the dispersion particle diameter of the polyphenylene ether resin [component (a)] exceeds 0.9 µm, the impact strength tends to decrease, and the surface appearance is liable to be poor. The particle diameter (average) of the polyphenylene ether resin [component (a)] is particularly preferably 0.05 to 0.8 µm.

The above "dispersion particle diameter" of the polyphenylene ether resin [component (a)] can be determined by taking a photograph of a resin composition of the present invention through a transmission electron microscope at a magnification of 10,000X to 50,000X and measuring the size of dispersed particles of the polyphenylene ether resin on the photograph.

Further, it is desirable that the above components in the resin composition of the present invention have the above-specified morphological forms for obtaining molded articles which exhibit excellent performances. For this purpose, it is advisable to employ a method in which the polyphenylene ether resin [component (a)], the hydrogenated A-B-A structured block copolymer elastomer [component (c)]. the polypropylene resin [component (d)] and the compatibilizer [component (e)] are mixed in the predetermined amounts and melt-kneaded under heat, and then predetermined amounts of the polyamide resin [component (b)] and the modified ethylene-α-olefin copolymer [component (f)] are melt-kneaded together with the above-obtained mixture under heat. In this case, the components (b) and (f) may be preliminarily melt-kneaded.

The resin composition of the present invention, obtained as described above, may further contain a variety of known additives as required, which are conventionally added to a resin composition containing a polyphenylene ether resin and a polyamide resin. Examples of these additives include a reinforcing material, a filler, a stabilizer, an ultraviolet absorbent, an antistatic agent, a lubricant, a mold releasing agent, a dye, a pigment and a flame retardant. Further, the examples of the above additives include organic or inorganic fillers and reinforcing materials such as a glass powder, glass beads, synthetic mica, fluorinated mica, zinc oxide, zinc oxide whisker, a carbon fiber, a stainless steel fiber and a wholly aromatic polyamide fiber (e.g., Kevler fiber).

The resin composition of the present invention can be molded by any methods known per se. For example, the molten resin composition of the present invention can be molded by any one of an extrusion method, an injection molding method and a compression molding method.

### <Effect of the invention>

The resin composition of the present invention consists essentially of the polyphenylene ether resin [component (a)], the polyamide resin [component (b)], the hydrogenated A-B-A structured block copolymer elastomer [component (c)], the polypropylene resin [component (d)], the compatibilizer [component (e)] and the ethylene-α-olefin copolymer [component (f)], and has a morphological form in which the ethylene-α-olefin copolymer is uniformly and intimately incorporated into the polyamide resin having a continuous phase and the hydrogenated A-B-A structured block copolymer elastomer and the polypropylene resin are uniformly and intimately incorporated into the polyphenylene ether resin having a dispersed phase. Due to the above morphological form, the resin composition of the present invention gives molded articles having excellent impact resistance at a low temperature and has excellent fluidity as compared with a conventional resin composition containing a polyphenylene ether resin and a polyamide resin.

### <Examples>

The present invention will be more specifically explained hereinafter by reference to Referential Examples, Examples and Comparative Examples, in which "part" stands for "part by weight". In Examples and Comparative Examples "Kraton G1651" was used as a hydrogenated A-B-A structured block copolymer elastomer and "Exxelor VA1803" was used as an ethylene-α-olefin copolymer modified with an unsaturated acid anhydride or acid anhydride. The "Kraton G1651" is a polystyrene-polybutadienepolystyrene block copolymer elastomer whose polystyrene portions has a weight average molecular weight of 29,000 and whose polybutadiene portion has a weight average molecular weight of 118,000, and it contains 29 % by weight of polystyrene and 71 % by weight of polybutadiene. The "Exxelor VA1803" is an ethylene-propylene copolymer modified with maleic anhydride, and it has 50 % by weight of an ethylene content and 50 % by weight of a propylene content and has 0.7 % by weight of maleic anhydride.

### Referential Example 1

80 Grams of maleic anhydride, 1.5 kilograms of a hydrogenated A-B-A structured block copolymer elastomer ("Kraton G1651" supplied by Shell Chemical Co.) and 2.3 kg of a polypropylene resin (Chissopolypro, K4017, supplied by Chisso Co.) were mixed with 7.7 kg of a poly(2,6-dimethyl-1,4-phenylene)ether powder having an intrinsic viscosity, measured in chloroform at 25°C, of 0.45 dl/g with a super mixer for 3 minutes, and then the mixture was melt-kneaded in a twin-screw extruder (TEM-35, supplied by Toshiba Machine Co., Ltd.) at 290° C to give a modified polyphenylene ether resin (a-1).

### Referential Example 2

80 Grams of maleic anhydride, 1.5 kg of a hydrogenated A-B-A structured block copolymer elastomer ("Kraton G1651" supplied by Shell Chemical Co.) and 5.0 kg of a polypropylene resin (Chissopolypro, K4017, supplied by Chisso Co.) were mixed with 5.0 kg of the same polyphenylene ether powder as that used in Referential Example 1 with a super mixer for 3 minutes, and then the mixture was melt-kneaded in twin-screw extruder at 290°C to give a modified polyphenylene ether resin (a-2).

### Referential Example 3

80 Grams of maleic anhydride and 1.5 kg of a hydrogenated A-B-A structured block copolymer elastomer ("Kraton G1651" supplied by Shell Chemical Co.) were mixed with 10.0 kg of the same polyphenylene ether powder as that used in Referential Example 1 with a super mixer for 3 minutes, and then the mixture was melt-kneaded in a twin screw extruder at 300°C to give a modified polyphenylene ether resin (a-3).

### Referential Example 4

80 Grams of maleic anhydride was mixed with 10.0 kg of the same polyphenylene ether powder as that used in Referential Example 1 with a super mixer for 3 minutes, and then the mixture was melt-kneaded in twin-screw extruder at 310° C to give a modified polyphenylene ether resin (a-4).

### Referential Example 5

80 Grams of maleic anhydride, 1.5 kg of a hydrogenated A-B-A structured block copolymer elastomer ("Kraton G1651" supplied by Shell Chemical Co.) and 1.1 kg of a polypropylene resin (Chissopolypro, K4017, supplied by Chisso Co.) were mixed with 8.9 kg of the same polyphenylene ether powder as that used in Referential Example 1 with a super mixer for 3 minutes, and then the mixture was melt-kneaded in twin-screw extruder at 290°C to give a modified polyphenylene ether resin (a-5).

### Referential Example 6

80 Grams of maleic anhydride, 1.5 kg of a hydrogenated A-B-A structured block copolymer elastomer ("Kraton G1651" supplied by Shell Chemical Co.) and 3.3 kg of a polypropylene resin (Chissopolypro, K4017, supplied by Chisso Co.) were mixed with 6.7 kg of the same polyphenylene ether powder as that used in Referential Example 1 with a super mixer for 3 minutes, and then the mixture was melt-kneaded in twin-screw extruder at 290°C to give a modified polyphenylene ether resin (a-6).

### Example 1

5.0 Kilograms of the modified polyphenylene ether resin (a-1) obtained in Referential Example 1, 5.0 kg of 6-nylon (Amilan CM1097, supplied by Toray Industries, Inc.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280° C to give pellets. The pellets were injection-molded to prepare various test pieces, and the test pieces were measured for various physical properties. Table 2 shows the results.

The morphology of the above pellets was observed through a transmission electron microscope to show that the matrix was formed of 6-nylon, that polyphenylene ether resin and VA-1803 were dispersed as a domain and that VA-1803 was present in 6-nylon alone. Further, it was observed that Kraton G1651 and polypropylene resin were all uniformly and intimately contained in polyphenylene ether resin, and that G1651 was present in the interface between polypropylene resin and polyphenylene ether resin. A photograph of the pellets was also taken through a transmission electron microscope, and 100 particles of the polyphenylene ether resin in a dispersed phase was measured for dispersed-particle diameters to show an average dispersed-particle diameter of about 0.5 µm.

### Comparative Example 1

5.0 Kilograms of the modified polyphenylene ether resin (a-1) obtained in Referential Example 1 and 5.0 kg of 6-nylon (Amilan, CM1097, supplied by Toray Industries, Inc.) were mixed, and the mixture was melt-kneaded in a twin-screw extruder at 280°C to obtain pellets. The pellets were injection-molded to prepare various test pieces, and the test pieces were measured for various physical properties. Table 2 show the results.

The morphology of the above pellets was observed, and the dispersed particles of the polyphenylene ether resin were measured for dispersed-particle diameters, in the same manner as in Example 1 to show the following. The matrix was formed of 6-nylon, and polyphenylene ether resin was dispersed as a domain. Further, Kraton G1651 and polypropylene resin were all uniformly and intimately contained in polyphenylene ether resin, and that Kraton G1651 was present in the interface between polypropylene resin and polyphenylene ether resin. The polyphenylene ether resin had an average dispersed-particle diameter of about 0.5 µm.

### Comparative Example 2

5.0 Kilograms of the modified polyphenylene ether resin (a-2) obtained in Referential Example 2, 5.0 kg of 6-nylon (Amilan, CM1097, supplied by Toray Industries, Inc.) and 1.0 kg of an ethylene-α-olefin copolymer modified with maleic anhydride (Exxelor VA1893, supplied by Exxon Chemical) were mixed, and the mixture was melt-kneaded in a twin-screw extruder at 280° C to obtain pellets. The pellets were injection-molded to prepare various test pieces, and the test pieces were measured for various physical properties. Table 2 show the results.

The morphology of the above pellets was observed, and the dispersed particles of the polyphenylene ether resin were measured for dispersed-particle diameters, in the same manner as in Example 1 to show that the morphology was the same as that in Example 1 while the average dispersed-particle average particle diameter of the polyphenylene ether resin was about 0.3 µm.

### Comparative Example 3

4.0 Kilograms of the modified polyphenylene ether resin (a-3) obtained in Referential Example 3, 5.0 kg of 6-nylon (Amilan CM1097, supplied by Toray Industries, Inc.), 1.0 kg of a polypropylene resin (Chissopolypro, K4017, supplied by Chisso Co.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280°C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The matrix was formed of 6-nylon, polyphenylene ether resin and VA-1803 were dispersed as a domain, and VA-1803 was present in 6-nylon alone. G-1651 was all present in polyphenylene ether resin. Further, polypropylene resin was dispersed in an amorphous form and present mainly in nylon. The polyphenylene ether resin had an average dispersed-particle diameter of about 0.8 µm.

### Comparative Example 4

4.0 Kilograms of the modified polyphenylene ether resin (a-3) obtained in Referential Example 3, 5.0 kg of 6-nylon (Amilan CM1097, supplied by Toray Industries, Inc.), 1.0 kg of a polypropylene resin modified with maleic anhydride (Admer, QF305, supplied by Mitsui Petrochemical Industries, Ltd.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280°C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The matrix was formed of 6-nylon, polyphenylene ether resin and VA-1803 were present as a domain, and VA-1803 was present in 6-nylon alone. Kraton G1651 was all present in polyphenylene ether resin. Further, polypropylene modified with maleic anhydride was mainly present in nylon. The polyphenylene ether resin had an average dispersed-particle diameter of about 0.8 µm.

### Comparative Example 5

5.0 Kilograms of the modified polyphenylene ether resin (a-3) obtained in Referential Example 3, 5.0 kg of 6-nylon (Amilan CM1097, supplied by Toray Industries, Inc.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280°C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The matrix was formed of 6-nylon, polyphenylene ether resin and VA-1803 were dispersed as a domain, and VA-1803 was present in 6-nylon alone. Kraton G1651 was all present in polyphenylene ether resin. The polyphenylene ether resin had an average dispersed-particle diameter of about 0.8 µm.

### Comparative Example 6

3.3 Kilograms of the modified polyphenylene ether resin (a-4) obtained in Referential Example 4, 5.0 kg of 6-nylon (Amilan CM1097, supplied by Toray Industries, Inc.), 1.0 kg of a polypropylene resin modified with maleic anhydride (Admer, QF305, supplied by Mitsui Petrochemical Industries, Ltd.), 0.7 kg of a hydrogenated A-B-A structured block copolymer elastomer (Kraton G1651, supplied by Shell Chemical Co.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280°C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The matrix was formed of 6-nylon, polyphenylene ether resin and VA-1803 were dispersed as a domain, and VA-1803 was present in 6-nylon alone. Further, Kraton G1651 was in an amorphous state and totally present in the composition, and polypropylene modified with maleic anhydride was mainly present in nylon. The polyphenylene ether resin had an average dispersed-particle diameter of about 1.2 µm.

### Example 2

5.0 Kilograms of the modified polyphenylene ether resin (a-5) obtained in Referential Example 5, 5.0 kg of 6-nylon (Amilan CM1097, supplied by Toray Industries, Inc.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280° C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The morphology was the same as that of Example 1, and the polyphenylene ether resin had an average dispersed-particle diameter of about 0.6 µm.

### Example 3

5.0 Kilograms of the modified polyphenylene ether resin (a-6) obtained in Referential Example 6, 5.0 kg of 6-nylon (Amilan CM1097, supplied by Toray Industries, Inc.) and 1.0 kg of an ethylene-α-olefin copolymer modified with maleic anhydride (Exxelor, VA1803, supplied by Exxon Chemical) were mixed, and the mixture was melt-kneaded in a twin-screw extruder at 280°C to give pellets. The pellets were injection-molded to prepare various test pieces, and the test pieces were measured for various physical properties. Table 2 shows the results.

The morphology of the above pellets was observed, and the dispersed particles of the polyphenylene ether resin were measured for dispersed-particle diameters, in the same manner as in Example 1 to show the following. The morphology was the same as that of Example 1, and the polyphenylene ether resin had an average dispersed-particle diameter of about 0.4 µm.

Table 1 shows the resin compositions of the above Examples 1 to 3 and Comparative Examples 1 to 6, and Table 2 shows the physical properties of the test pieces obtained in those Examples and Comparative Examples.

**Table 1**

| | | Ex. 1 | Comp. Ex. 1 | Comp. Ex. 2 | Comp. Ex. 3 | Comp. Ex. 4 | Comp. Ex. 5 | Comp. Ex. 6 | Ex.2 | Ex. 3 |
|---|---|---|---|---|---|---|---|---|---|---|
| Modified PPE | a-1 | 5.0 | 5.0 | | | | | | | |
| | a-2 | | | 5.0 | | | | | | |
| | a-3 | | | | 4.0 | 4.0 | 5.0 | | | |
| | a-4 | | | | | | | 3.3 | | |
| | a-5 | | | | | | | | 5.0 | |
| | a-6 | | | | | | | | | 5.0 |
| 6-Nylon | | 5.0 | 5.0 | 5.0 | 5.0 | 5.0 | 5.0 | 5.0 | 5.0 | 5.0 |
| Modified EPR *1 | | 1.0 | | 1.0 | 1.0 | 1.0 | 1.0 | 1.0 | 1.0 | 1.0 |
| Polypropylene | | | | | 1.0 | | | | | |
| Polypropylene modified with maleic anhydride | | | | | | 1.0 | | 1.0 | | |
| SEBS *2 | | | | | | | | 0.7 | | |

| | | | | | | | | | | |
|---|---|---|---|---|---|---|---|---|---|---|
| *1 Modified EPR: Exxelor® VA1803 | | | | | | | | | | |
| *2 SEBS: Kraton® G1651 Unit of figures in Table = kg | | | | | | | | | | |

**Table 2**

| | | Unit | Ex. 1 | Comp. Ex. 1 | Comp. Ex. 2 | Comp. Ex. 3 | Comp. Ex. 4 | Comp. Ex. 5 | Comp. Ex. 6 | Ex. 2 | Ex. 3 |
|---|---|---|---|---|---|---|---|---|---|---|---|
| Tensile yield strength | | MPa | 40 | 48 | 34 | 37 | 41 | 48 | 35 | 42 | 38 |
| Tensile elongation at break | | % | 100 | 100 | 60 | 25 | 100 | 100 | 25 | 100 | 100 |
| Flexural strength | | MPa | 60 | 72 | 50 | 55 | 62 | 69 | 54 | 62 | 58 |
| Flexural modulus | | GPa | 1.6 | 2.0 | 1.3 | 1.5 | 1.7 | 1.8 | 1.4 | 1.7 | 1.5 |
| DTUL *1 | | °C | 175 | 178 | 165 | 172 | 175 | 175 | 168 | 175 | 174 |
| Izod impact strength | | | | | | | | | | | |
| | 23°C | J/m | 840 | 760 | 840 | 310 | 470 | 750 | 300 | 830 | 840 |
| | -30°C | J/m | 580 | 200 | 580 | 220 | 250 | 290 | 220 | 530 | 580 |
| Bar flow *2 | | mm | 280 | 300 | 285 | 270 | 270 | 200 | 250 | 270 | 285 |

| | | | | | | | | | | | |
|---|---|---|---|---|---|---|---|---|---|---|---|
| *1 DTUL: Low-load (0.45 MPa) | | | | | | | | | | | |
| *2 Bar flow: Thickness: 2mm, cylinder temperature: 280°C, injection pressure: 98.07 MPa (1,000 Kg/cm²) | | | | | | | | | | | |

## Claims

1. A thermoplastic resin composition consisting essentially of:
(a) a polyphenylene ether resin having a main chain comprisinq structural units of formula (1), 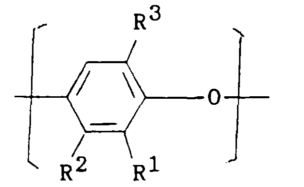 wherein R¹ is a C₁-C₃ alkyl, and each of R² and R³ is independently hydrogen or C₁ -C₃ alkyl,
(b) a polyamide resin,
(c) a hydrogenated A-B-A structured block copolymer elastomer in which each A block is derived from a vinyl aromatic hydrocarbon and has a weight average molecular weight of 4000 to 115000 and the B block is derived from a conjugated diene hydrocarbon compound and has a weight average molecular weight of 20000 to 450,000,
(d) a polypropylene resin,
(e) a compatibilizer which is a 1,2-substituted olefin compound, and
(f) an ethylene-α-olefin copolymer modified with an unsaturated acid or acid anhydride
wherein:
(i) the amount of (a) is 70 to 30 parts by weight and the amount of (b) is 30 to 70 parts by weight per 100 parts by weight of the total amount of (a) and (b),
(ii) the amount of (c) is 2 to 40 parts by weight per 100 parts by weight of (a),
(iii) the amount (d) is 2 to 60 parts by weight per 100 parts by weight of (a),
(iv) the amount of (e) is 0.01 to 10 parts by weight per 100 parts by weight of (a),
(v) the amount of (f) is 2 to 40 parts by weight per 100 parts by weight of (b), and
(vi) (b) is present as a continuous phase, and (a) is present as a dispersed phase.

2. A composition according to claim 1, wherein (a) is present as a dispersed phase in (b) and (f) is uniformly and intimately contained in (b).

3. A composition according to claim 2, wherein (c) and (d) are both uniformly and intimately contained in (a).

4. A composition according to claims 1, 2 or 3, wherein (a) is in the form of particles having an average particle diameter of 0.9 µm or less dispersed in (b).

5. A composition according to any one of the preceding claims wherein (e) is at least one compound selected from the group consisting of maleic anhydride, itaconic anhydride and citraconic anhydride.

6. A composition according to any one of the preceding claims, wherein the amount of (a) is 60 to 40 parts by weight and the amount of (b) is 40 to 60 parts by weight, per 100 parts by weight of the total amount of (a) and (b).

7. A composition according to any one of the preceding claims wherein the amount of (c) is 5 to 30 parts by weight per 100 parts by weight of (a).

8. A composition according to any one of the preceding claims, wherein the amount of (d) is 10 to 50 parts by weight per 100 parts by weight of (a).

9. A composition according to any one of the preceding claims wherein the amount of (e) is 0.1 to 3 parts by weight per 100 parts by weight of (a).

10. A composition according to any one of the preceding claims wherein the amount of (f) is 5 to 30 parts by weight per 100 parts by weight of (b).

11. A process for the production of a thermoplastic resin composition as claimed in any one of the preceding claims which comprises melt-kneading predetermined amounts of (a), (c), (d) and (e) to prepare a mixture, and melt-kneading the resulting mixture with predetermined amounts of (b) and (f).

12. Molded articles obtained by molding a thermoplastic resin composition as claimed in any one of claims 1 to 10.

## Patentansprüche

1. Thermoplastische Harzmasse, bestehend im wesentlichen aus:
(a) einem Polyphenylenetherharz mit einer Hauptkette, umfassend Struktureinheiten der Formel (1) 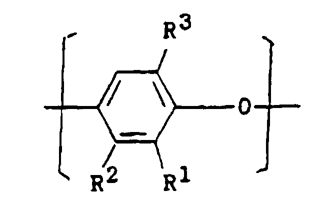 wobei R¹ ein C₁-C₃-Alkyl ist und jedes R² und R³ unabhängig Wassserstoff oder C₁-C₃-Alkyl ist,
(b) einem Polyamidharz,
(c) einem hydrierten elastomeren Blockcopolymer der Struktur A-B-A, wobei jeder Block A abgeleitet ist von einem vinylaromatischen Kohlenwasserstoff und ein gewichtsmäßiges mittleres Molekulargewicht von 4 000 bis 115 000 besitzt und der Block B abgeleitet ist von einer konjugierten Dienkohlenwasserstoffverbindung und ein gewichtsmäßiges mittleres Molekulargewicht von 20 000 bis 450 000 aufweist,
(d) einem Polypropylenharz,
(e) einem Verträglichmacher, der eine 1,2-substituierte Olefinverbindung ist und
(f) einem Ethylen/α-Olefin-Copolymer, das mit einer ungesättigten Säure oder einem Säureanhydrid modifiziert ist, wobei
(i) die Menge an (a) 70 bis 30 Gewichtsteile und die Menge an (b) 30 bis 70 Gewichtsteile auf 100 Gewichtsteile der Gesamtmenge an (a) und (b) beträgt,
(ii) die Menge an (c) 2 bis 40 Gewichtsteile auf 100 Gewichtsteile (a) beträgt,
(iii) die Menge (d) 2 bis 60 Gewichtsteile auf 100 Gewichtsteile (a) beträgt,
(iv) die Menge an (e) 0,01 bis 10 Gewichtsteile auf 100 Gewichtsteile (a) beträgt,
(v) die Menge an (f) 2 bis 40 Gewichtsteile auf 100 Gewichtsteile (b) beträgt und
(vi) (b) als kontinuierliche Phase und (a) als disperse Phase vorliegt.

2. Masse nach Anspruch 1, wobei (a) als disperse Phase in (b) vorliegt und (f) gleichförmig und innig vermischt in (b) enthalten ist.

3. Masse nach Anspruch 2, wobei (c) und (d) beide gleichförmig und innig vermischt in (a) enthalten sind.

4. Masse nach Anspruch 1, 2 oder 3, wobei (a) in Form von Teilchen mit einem mittleren Teilchendurchmesser von 0,9 µm oder weniger in (b) dispergiert ist.

5. Masse nach einem der vorangehenden Ansprüche, wobei (e) mindestens eine Verbindung ist, ausgewählt aus der Gruppe bestehend aus Maleinsäureanhydrid, Itaconsäureanhydrid und Citraconsäureanhydrid.

6. Masse nach einem der vorangehenden Ansprüche, wobei die Menge an (a) 60 bis 40 Gewichtsteile und die Menge an (b) 40 bis 60 Gewichtsteile auf 100 Gewichtsteile der Gesamtmenge an (a) und (b) beträgt.

7. Masse nach einem der vorangehenden Ansprüche, wobei die Menge an (c) 5 bis 30 Gewichtsteile auf 100 Gewichtsteile (a) beträgt.

8. Masse nach einem der vorangehenden Ansprüche, wobei die Menge an (d) 10 bis 50 Gewichtsteile auf 100 Gewichtsteile (a) beträgt.

9. Masse nach einem der vorangehenden Ansprüche, wobei die Menge an (e) 0,1 bis 3 Gewichtsteile auf 100 Gewichtsteile (a) beträgt.

10. Masse nach einem der vorangehenden Ansprüche, wobei die Menge an (f) 5 bis 30 Gewichtsteile auf 100 Gewichtsteile (b) beträgt.

11. Verfahren zur Herstellung einer thermoplastischen Harzmasse nach einem der vorangehenden Ansprüche, umfassend das Verkneten vorbestimmter Mengen an (a), (c), (d) und (e) in der Schmelze zur Herstellung eines Gemisches und Verkneten des erhaltenen Gemisches mit vorbestimmten Mengen an (b) und (f) in der Schmelze.

12. Formkörper, erhalten durch Formen einer thermoplastischen Harzmasse, nach einem der Ansprüche 1 bis 10.

## Revendications

1. Composition résineuse thermoplastique qui comprend principalement :
(a) une résine poly(phénylène éther) présentant une chaîne principale qui comprend des motifs structuraux répondant à la formule (1), 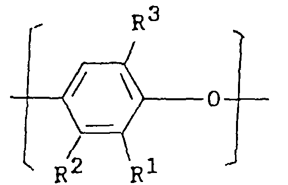 dans laquelle R¹ représente un groupe alkyle en C₁-C₃, et chacun des symboles R² et R³ représente indépendamment un atome d'hydrogène ou un groupe alkyle en C₁-C₃,
(b) une résine polyamide,
(c) un élastomère de type copolymère en blocs, de structure A-B-A, hydrogéné, dans lequel chaque bloc A est dérivé d'un hydrocarbure aromatique vinylique et présente une masse moléculaire moyenne en poids comprise entre 4 000 et 115 000, et le bloc B est dérivé d'un hydrocarbure de type diène conjugué et présente une masse moléculaire moyenne en poids comprise entre 20 000 et 450 000,
(d) une résine polypropylène,
(e) un agent de compatibilité qui est un composé oléfinique substitué en positions 1 et 2, et
(f) un copolymère éthylène/α-oléfine modifié avec un anhydride d'acide ou acide insaturé
dans laquelle :
(i) la quantité de (a) est comprise entre 70 et 30 parties en poids et la quantité de (b) est comprise entre 30 et 70 parties en poids pour 100 parties en poids de la quantité totale de (a) et (b),
(ii) la quantité de (c) est comprise entre 2 et 40 parties en poids pour 100 parties en poids de (a),
(iii) la quantité de (d) est comprise entre 2 et 60 parties en poids pour 100 parties en poids de (a),
(iv) la quantité de (e) est comprise entre 0,01 et 10 parties en poids pour 100 parties en poids de (a),
(v) la quantité de (f) est comprise entre 2 et 40 parties en poids pour 100 parties en poids de (b), et
(vi) (b) est présent sous la forme d'une phase continue et (a) est présent sous la forme d'une phase dispersée.

2. Composition conforme à la revendication 1, dans laquelle (a) est présent sous la forme d'une phase dispersée dans (b) et (f) est uniformément et intimement contenu dans (b).

3. Composition conforme à la revendication 2, dans laquelle (c) et (d) sont tous les deux uniformément et intimement contenus dans (a).

4. Composition conforme aux revendications 1, 2 ou 3, dans laquelle (a) se trouve sous la forme de particules présentant un diamètre moyen de particule de 0,9 µm ou moins, dispersées dans (b).

5. Composition conforme à l'une quelconque des précédentes revendications, dans laquelle (e) est au moins un composé choisi dans l'ensemble constitué par l'anhydride maléique, l'anhydride itaconique et l'anhydride citraconique.

6. Composition conforme à l'une quelconque des précédentes revendications, dans laquelle la quantité de (a) est comprise entre 60 et 40 parties en poids et la quantité de (b) est comprise entre 40 et 60 parties en poids pour 100 parties en poids de la quantité totale de (a) et (b).

7. Composition conforme à l'une quelconque des précédentes revendications, dans laquelle la quantité de (c) est comprise entre 5 et 30 parties en poids pour 100 parties en poids de (a).

8. Composition conforme à l'une quelconque des précédentes revendications, dans laquelle la quantité de (d) est comprise entre 10 et 50 parties en poids pour 100 parties en poids de (a).

9. Composition conforme à l'une quelconque des précédentes revendications, dans laquelle la quantité de (e) est comprise entre 0,1 et 3 parties en poids pour 100 parties en poids de (a).

10. Composition conforme à l'une quelconque des précédentes revendications, dans laquelle la quantité de (f) est comprise entre 5 et 30 parties en poids pour 100 parties en poids de (b).

11. Procédé pour produire une composition résineuse thermoplastique conforme à l'une quelconque des précédentes revendications, qui comprend le malaxage à l'état fondu de quantités prédéterminées de (a), de (c), de (d) et de (e) pour préparer un mélange, et le malaxage à l'état fondu du mélange résultant avec des quantités prédéterminées de (b) et de (f).

12. Articles moulés obtenus par moulage d'une composition résineuse thermoplastique conforme à l'une quelconque des revendica-tions 1 à 10.
